# FASCICULE DE BREVET EUROPEEN

(11) **EP 1 127 773 B1**
(45) Date de publication et mention de la délivrance du brevet: **08.03.2006**
(21) Numéro de dépôt: 01420028.1
(22) Date de dépôt: 06.02.2001
(51) Int. Cl.: B62D 3/12

(54) **Dispositif de guidage de crémaillère pour mécanisme de direction de véhicule automobile**
Zahnstangenführung für eine Kraftfahrzeuglenkung
Rack guiding device for motor vehicle steering mechanism

(30) Priorité: 22.02.2000 FR 0002201
(43) Date de publication de la demande: 29.08.2001
(73) Titulaire: Société de Mécanique d'Irigny, 69540 Irigny (FR)
(72) Inventeur: Reynard, Bruno, 69008 Lyon (FR)
(74) Mandataire: Bratel, Gérard

(56) Documents cités:
- EP-A- 0 906 862
- FR-A- 2 059 774
- FR-A- 2 690 122
- US-A- 5 181 581

## Description

La présente invention concerne les mécanismes de direction à crémaillère, pour véhicules automobiles. Plus particulièrement, cette invention se rapporte à un dispositif de guidage de la crémaillère, pour un tel mécanisme de direction.

De manière habituelle, un mécanisme de direction à crémaillère comprend un carter fixe tubulaire, dans lequel est montée coulissante, axialement, une crémaillère dont les deux extrémités se situent à l'extérieur du carter, et sont articulées, par des rotules, à des biellettes. La denture de la crémaillère vient en prise avec un pignon, dont l'arbre est accouplé à la colonne de direction, sur laquelle est monté le volant de conduite du véhicule.

Le pignon se situant vers une extrémité du carter tubulaire, il convient d'assurer un guidage correct de la crémaillère, à l'extrémité dudit carter tubulaire qui est la plus éloignée du pignon. Ceci est habituellement réalisé au moyen d'une bague de guidage, montée à l'intérieur du carter tubulaire, vers l'extrémité de ce dernier opposée au pignon.

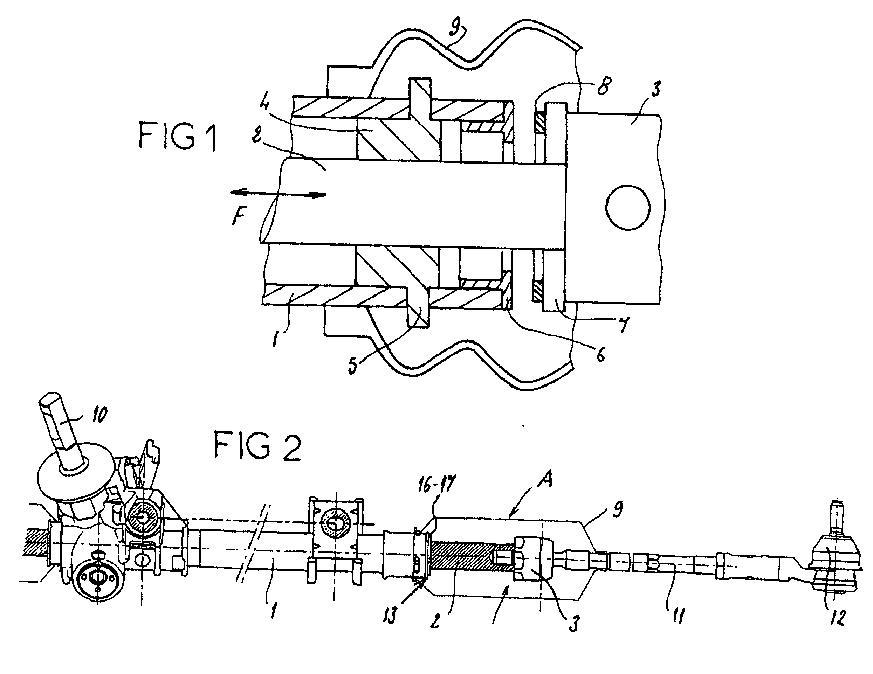

La figure 1 représente schématiquement la région de cette extrémité du carter tubulaire, en illustrant une réalisation actuelle :

Le repère 1 désigne ici le carter tubulaire, dans lequel est montée coulissante axialement, suivant la flèche F, une crémaillère 2 dont l'extrémité porte un boîtier de rotule 3, servant à l'articulation d'une biellette. Le guidage de la crémaillère 2 est assuré par une bague 4, montée à l'intérieur du carter tubulaire 1 à quelque distance de son extrémité. La bague de guidage 4 comporte, à sa périphérie, des ergots de positionnement et de retenue 5, introduits au travers d'ouvertures correspondantes du carter 1. En outre, une bague d'arrêt 6 est montée à l'extrémité du carter 1. Sur le boîtier de rotule 3, en regard de l'extrémité du carter 1, est monté un élément limiteur de fin de course 7, lui-même pourvu d'une partie en saillie 8 qui constitue un absorbeur d'énergie, permettant un amortissement de fin de course et une réduction des bruits. Par ailleurs un soufflet 9, recouvrant le boîtier de rotule 3, est retenu sur le carter tubulaire 1, le moyen de retenue devant résister à la traction exercée sur le soufflet 9.

Ainsi, pour réaliser les diverses fonctions nécessaires, plusieurs composants distincts doivent être montés, séparément, dans la région de l'extrémité considérée du carter tubulaire. Il en résulte une complexité de construction, un coût relativement élevé, et des risques d'erreurs ou d'oublis de pièces lors du montage.

Le document FR 2059774 montre une réalisation qui correspond approximativement à cet état de la technique. Toutefois, ce document vise un amortissement hydraulique des chocs dans le mécanisme de direction, de sorte qu'il ne peut directement suggérer des moyens d'absorption purement mécaniques, tels que prévus par la présente invention.

La présente invention vise à éviter les inconvénients précédemment exposés, en fournissant un dispositif perfectionné situé à l'extrémité concernée du carter de la direction à crémaillère, et assurant plusieurs fonctions mécaniques au moyen d'un seul élément, de manière à simplifier la structure et les opérations de montage, dans un but d'économie et de qualité de fabrication.

A cet effet, l'invention a essentiellement pour objet un dispositif de guidage de crémaillère pour mécanisme de direction de véhicule automobile, plus particulièrement destiné au guidage de la crémaillère vers l'extrémité du carter tubulaire fixe de la direction la plus éloignée du pignon en prise avec cette crémaillère, ladite crémaillère portant à son extrémité correspondante un boîtier de rotule, et le dispositif de guidage comprenant une bague montée à l'intérieur du carter tubulaire, pourvue à sa périphérie de moyens de retenue sur le carter et formant par sa partie interne un palier de guidage pour la crémaillère, le dispositif étant caractérisé en ce que la bague est prolongée, en avant de l'extrémité considérée du carter, par une partie constituant absorbeur d'énergie, située en regard du boîtier de rotule porté par l'extrémité correspondante de la crémaillère.

Ainsi, une bague unique de conformation adaptée assure, selon l'invention, les fonctions actuellement réalisées par plusieurs composants distincts. On obtient donc une simplification constructive (diminution du nombre de pièces), conduisant à une économie certaine et à une facilité de montage, en évitant aussi tout risque d'omission d'une pièce lors du montage.

Les moyens de retenue de la bague sont avantageusement constitués par des ergots, formés à la périphérie de ladite bague et introduits au travers d'ouvertures correspondantes du carter tubulaire, ces moyens étant ainsi intégrés à la bague.

Dans un mode de réalisation préféré du dispositif objet de l'invention, la partie constituant absorbeur d'énergie est une partie annulaire formée, en saillie, sur une collerette de la bague qui prend place contre la face d'extrémité du carter tubulaire.

La bague est réalisable comme une pièce en matière plastique moulée, de dureté appropriée. Cette bague peut aussi être réalisée en deux ou plusieurs matériaux distincts, en particulier un premier matériau pour la partie de guidage et un autre matériau pour la partie constituant absorbeur d'énergie, de manière à optimiser chaque fonction.

L'invention sera mieux comprise à l'aide de la description qui suit, en référence au dessin schématique annexé représentant, à titre d'exemple, une forme d'exécution de ce dispositif de guidage de crémaillère pour mécanisme de direction de véhicule automobile :
Figure 1 (déjà mentionnée) montre un dispositif de l'état de la technique ;
Figure 2 est une vue d'ensemble d'une direction à crémaillère, équipée du dispositif objet de l'invention ;
Figure 3 représente, à échelle agrandie, la partie de cette direction à crémaillère concernée par la présente invention, cette figure pouvant être considérée comme le détail "A" de la figure 2 ;
Figure 4 est une vue de détail, en coupe, du dispositif objet de l'invention, dans une représentation analogue à celle de la figure 1.

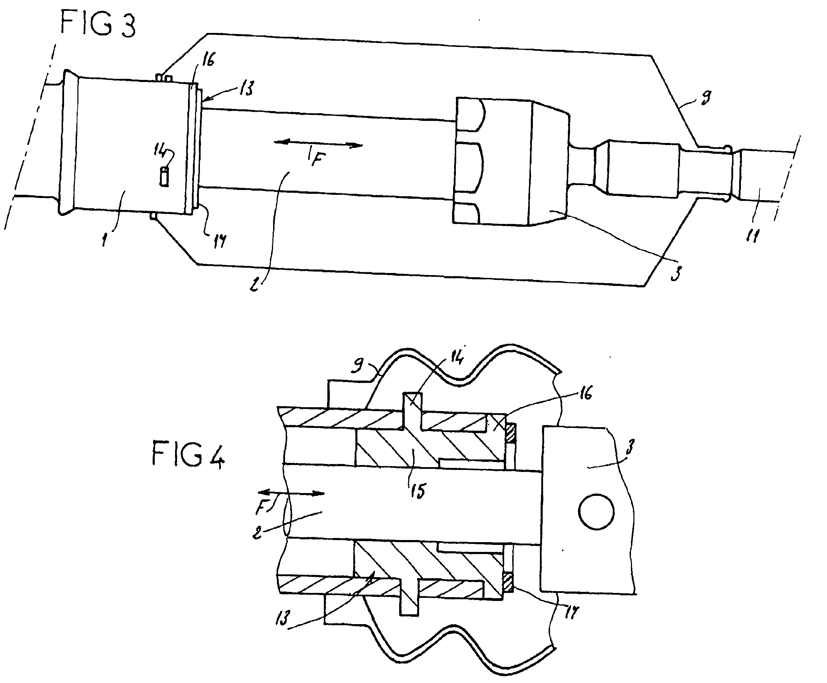

Sur les figures 2 et 3, le repère 1 désigne comme précédemment le carter central fixe tubulaire d'une direction à crémaillère de véhicule automobile. Dans le carter tubulaire 1 est montée coulissante, axialement, la crémaillère 2 dont les deux extrémités se situent à l'extérieur du carter 1, seule l'extrémité droite de la crémaillère 2 étant ici représentée. La crémaillère 2 possède une denture venant en prise avec un pignon dont l'arbre 10 est accouplé à la colonne de direction (non représentée), le pignon étant situé vers l'extrémité gauche du carter 1.

Chaque extrémité de la crémaillère 2 porte un boîtier de rotule 3, servant à l'articulation d'une première extrémité d'une biellette 11, dont l'autre extrémité est solidaire d'un boîtier "côté roue" 12.

On considère ici, plus particulièrement, les extrémités du carter 1 et de la crémaillère 2 situées du côté éloigné du pignon, ces parties étant représentées plus en détail sur la figure 3 et, surtout, sur la figure 4.

Une bague 13, de configuration et fonctions particulières, est montée à l'intérieur du carter tubulaire 1, vers l'extrémité de celui-ci éloignée du pignon, le profil de la bague 13 étant bien visible sur la figure 4.

La bague 13 comporte, à sa périphérie, des ergots de positionnement et de retenue 14, introduits au travers d'ouvertures correspondantes du carter 1.

La partie interne de la bague 13 forme un palier de guidage 15 pour la crémaillère 2, ce palier se situant en retrait par rapport à l'extrémité droite du carter 1.

La bague 13 est prolongée, en direction de cette extrémité droite du carter 1, par une partie annulaire qui forme une collerette 16, prenant place contre la face d'extrémité du carter tubulaire 1. Sur la collerette 16 est formée au moins une partie en saillie 17, par exemple une partie annulaire, tournée en direction du boîtier de rotule 3.

La bague 13 est avantageusement une pièce en matière plastique moulée. Cette pièce assure les fonctions de guidage de la crémaillère 2, et d'absorbeur d'énergie en fin de course de la crémaillère 2, lorsque le boîtier de rotule 3 vient en butée contre la partie en saillie 17. Il est possible de réaliser la bague 13 en deux ou plusieurs matériaux distincts, par exemple réunis par surmoulage, chaque partie 15, 16, 17 de ladite bague 13 pouvant ainsi être constituée du matériau le mieux adapté à sa fonction.

L'on ne s'éloignerait pas du cadre de l'invention, telle que définie dans les revendications :
- en réalisant la bague 13 en toute(s) matière(s) appropriée(s) ;
- en réalisant la retenue de cette bague, sur le carter tubulaire, par tout moyen approprié ;
- en donnant à la partie 17, constituant absorbeur d'énergie, toute configuration adaptée à cette fonction ;
- dans le cas d'un carter tubulaire 1 en matière plastique, en prévoyant que la bague 13, ou du moins une partie de celle-ci, est intégrée à ce carter 1 ;
- en destinant le dispositif à des directions à crémaillères de tous types, que celles-ci soient notamment des directions manuelles ou des directions assistées.

## Revendications

1. Dispositif de guidage de crémaillère pour mécanisme de direction de véhicule automobile, plus particulièrement destiné au guidage de la crémaillère (2) vers l'extrémité du carter tubulaire fixe (1) de la direction la plus éloignée du pignon en prise avec cette crémaillère, ladite crémaillère (2) portant à son extrémité correspondante un boîtier de rotule (3), et le dispositif de guidage comprenant une bague (13) montée à l'intérieur du carter tubulaire (1), pourvue à sa périphérie de moyens de retenue (14) sur le carter (1), et formant par sa partie interne un palier de guidage (15) pour la crémaillère (2), **caractérisé en ce que** la bague (13) est prolongée, en avant de l'extrémité considérée du carter (1), par une partie (17) constituant absorbeur d'énergie, située en regard du boîtier de rotule (3) porté par l'extrémité correspondante de la crémaillère (2).

2. Dispositif selon la revendication 1, **caractérisé en ce que** les moyens de retenue sont constitués par des ergots (14), formés à la périphérie de la bague (13) et introduits au travers d'ouvertures correspondantes du carter tubulaire (1).

3. Dispositif selon la revendication 1 ou 2, **caractérisé en ce que** la partie, constituant absorbeur d'énergie, est une partie annulaire (17) formée, en saillie, sur une collerette (16) de la bague (13) qui prend place contre la face d'extrémité du carter tubulaire (1).

4. Dispositif selon l'une quelconque des revendications 1 à 3, **caractérisé en ce que** la bague (13) est une pièce en matière plastique moulée.

5. Dispositif selon l'une quelconque des revendications 1 à 4, **caractérisé en ce que** la bague (13) est réalisée en deux ou plusieurs matériaux distincts, en particulier un premier matériau pour la partie de guidage (15) et un autre matériau pour la partie constituant absorbeur d'énergie (17).

6. Dispositif selon l'une quelconque des revendications 1 à 5, **caractérisé en ce que**, dans le cas d'un carter tubulaire (1) en matière plastique, la bague (13) ou du moins une partie de celle-ci est intégrée à ce carter (1).

## Patentansprüche

1. Führungsvorrichtung für eine Zahnstange eines Lenkmechanismus eines Kraftfahrzeuges, die insbesondere dazu bestimmt ist, die Zahnstange (2) gegen dasjenige Ende des ortsfesten rohrförmigen Gehäuses (1) der Lenkung hin zu führen, das von dem mit dieser Zahnstange in Eingriff stehenden Ritzel am weitesten entfernt ist, wobei die Zahnstange (2) an ihrem entsprechenden Ende ein Spurstangenkopfgehäuse (3) trägt und die Führungsvorrichtung einen im Inneren des rohrförmigen Gehäuses (I) montierten Ring (13) aufweist, der an seinem Umfang mit Halteeinrichtungen (14) zum Halten an dem Gehäuse (1) versehen ist und mit seinem Innenteil ein Führungslager (15) für die Zahnstange (2) bildet,
**dadurch gekennzeichnet,**
**daß** der Ring (13) über das betreffende Ende des Gehäuses (1) hinaus durch ein Teil (17) verlängert ist, das eine Energieabsorptionseinrichtung darstellt und dem von dem entsprechenden Ende der Zahnstange (2) getragenen Spurstangenkopfgehäuse (3) gegenüberliegend angeordnet ist.

2. Vorrichtung nach Anspruch 1,
**dadurch gekennzeichnet,**
**daß** die Halteeinrichtungen aus Vorsprüngen (14) bestehen, die am Umfang des Ringes (13) ausgebildet und durch entsprechende Öffnungen des rohrförmigen Gehäuses (1) eingeführt sind.

3. Vorrichtung nach Anspruch 1 oder 2,
**dadurch gekennzeichnet,**
**daß** das Teil, das eine Energieabsorptionseinrichtung darstellt, ein ringförmiges Teil (17) ist, das vorspringend auf einem gegen die Endfläche des rohrförmigen Gehäuses (1) anliegenden Bund (16) des Ringes (13) ausgebildet ist.

4. Vorrichtung nach einem der Ansprüche 1 bis 3,
**dadurch gekennzeichnet,**
**daß** der Ring (13) ein Stück aus geformtem Kunststoffmaterial besteht.

5. Vorrichtung nach einem der Ansprüche 1 bis 4,
**dadurch gekennzeichnet,**
**daß** der Ring (13) aus zwei oder mehr verschiedenen Materialien gefertigt ist, insbesondere aus einem ersten Material für das Führungsteil (15) und einem anderen Material für das Teil, das eine Energieabsorptionseinrichtung (17) darstellt.

6. Vorrichtung nach einem der Ansprüche 1 bis 5,
**dadurch gekennzeichnet,**
**daß** im Falle eines rohrförmigen Gehäuses (1) aus Kunststoffmaterial der Ring (13) oder zumindest ein Teil davon mit diesem Gehäuse (1) integriert ist.

## Claims

1. Device for guiding a steering rack for a motor vehicle steering mechanism, more specifically designed for guiding the steering rack (2) towards the end of the fixed tubular housing (1) of the steering mechanism which is furthest away from the pinion that is in engagement with this steering rack, said steering rack (2) having at its corresponding end a ball joint casing (3), and the guide device comprising a ring (13) which is mounted inside the tubular housing (1), said ring being provided on its periphery with means (14) for holding it on the housing (1) and forming with its inner part a guide bearing (15) for the steering rack (2), **characterized in that** the ring (13) is extended, in front of the end in question of the housing (1), by a part (17) which forms a shock absorber, said part being located opposite the ball joint casing (3) which is borne by the corresponding end of the steering rack (2).

2. Device according to Claim 1, **characterized in that** the holding means consist of lugs (14) which are formed on the periphery of the ring (13) and are introduced through corresponding openings in the tubular housing (1).

3. Device according to Claim 1 or 2, **characterized in that** the part which forms the shock absorber is an annular part (17) which is formed in a protruding manner on a collar (16) of the ring (13) which bears against the end face of the tubular housing (1).

4. Device according to any one of Claims 1 to 3, **characterized in that** the ring (13) is a part made of moulded plastics material.

5. Device according to any one of Claims 1 to 4, **characterized in that** the ring (13) is made of two or more different materials, in particular a first material for the guide part (15) and a different material for the part that forms the shock absorber (17).

6. Device according to any one of Claims 1 to 5, **characterized in that**, in the case of a tubular housing (1) made of plastics material, the ring (13) or at least part thereof is integrated in this housing (1).
